# EUROPEAN PATENT SPECIFICATION

(11) **EP 1 654 501 B1**
(45) Date of publication and mention of the grant of the patent: **14.10.2009**
(21) Application number: 04775304.1
(22) Date of filing: 12.08.2004
(51) Int. Cl.: F24F 13/068

(54) **AIR SUPPLY DEVICE**
LUFTZUFUHRVORRICHTUNG
DISPOSITIF D'ALIMENTATION EN AIR

(30) Priority: 13.08.2003 SE 0302201
(43) Date of publication of application: 10.05.2006
(73) Proprietor: Airsonett AB, 262 72 Ängelholm (SE)
(72) Inventor: KRISTENSSON, Jan, S-262 65 Ängelholm (SE); KRISTENSSON, Dan, S-262 63 Ängelholm (SE); SVENSSON, Pal, S-302 44 Halmstad (SE)
(74) Representative: Carlsen, Niels G.
(86) International application number: PCT/SE2004/001182
(87) International publication number: WO 2005/017419

(56) References cited:
- EP-A2- 0 787 954
- DE-A1- 2 608 792
- DE-A1- 19 958 659
- DE-C1- 4 014 795
- SE-C2- 506 210
- SE-C2- 516 775

## Description

The present invention relates to an air supply device for obtaining zones of clean air in premises, said air supply device comprising at least one air permeable body including at least one inner and at least one outer part of which the inner part consists of or includes porous material.

US 5 167 577 and SE 516 775 both define air supply units having outer layers of porous material, which means that they discharge air streams which unguided flow out in different directions and thereby cause undesired turbulence. Therefore, these air supply devices do not provide clean-air zones of optimum purity.

EP 0 787 954 and DE 26 08 792 relate to conventional air distributors having demands upon good air distribution but without demands upon generating absolute pure zones of intake or supply air without admixture of surrounding impure air. These air distributors can provide a good air distribution with e.g, irregular air distribution within a larger area, which however does not mean that one can obtain a pure clean-air zone.

US 2003/0153260 discloses air supply units that deliver a slowly descending flow of cooled, purified air according to the preamble of claim 1. However, these units do not provide optimum reduction of turbulence.

The object of the present invention is to provide a simple air supply device for obtaining a pure zone of intake air. This is arrived at by providing the air supply device with the characterizing features of sub sequent claim 1.

The new air supply device is a simple device which is easy to keep clean and permits discharge of under-tempered air, improved directional effect on the supplied air and a more uniform air distribution, which re suits in less coejection of impure surrounding air and thereby formation of a clean-air zone of optimum purity.

The invention will be further described below with reference to the accompanying drawings, in which
figure 1 is a side view of an air supply device according to the invention;
figure 2 is a section through a portion of an intake air unit forming part of the air supply device;
figure 3 is a view III-III of a portion of the air supply device of figure 2;
figure 4 illustrates a location of the air supply device of figure 1 in premises;
figure 5 schematically illustrates an air flow pattern provided by a prior art air supply device;
figure 6 schematically illustrates an air flow pattern provided by the air supply device according to the invention; and
figure 7 illustrates the location of the air supply device of figure 1 in a space above a door.

The air supply device 1 illustrated in the drawings is adapted to supply air A, preferably clean and/or cool air, to premises 2 in buildings 3. This air supply device 1 is preferably located in upper parts 4 of the premises 2 and comprises an intake air unit 5 which is at least partly directed downwards and which is provi deaf to distribute the air A in uniformly distributed air streams 6 in order to form a zone 7 of clean air substantially beneath the air supply device 1.

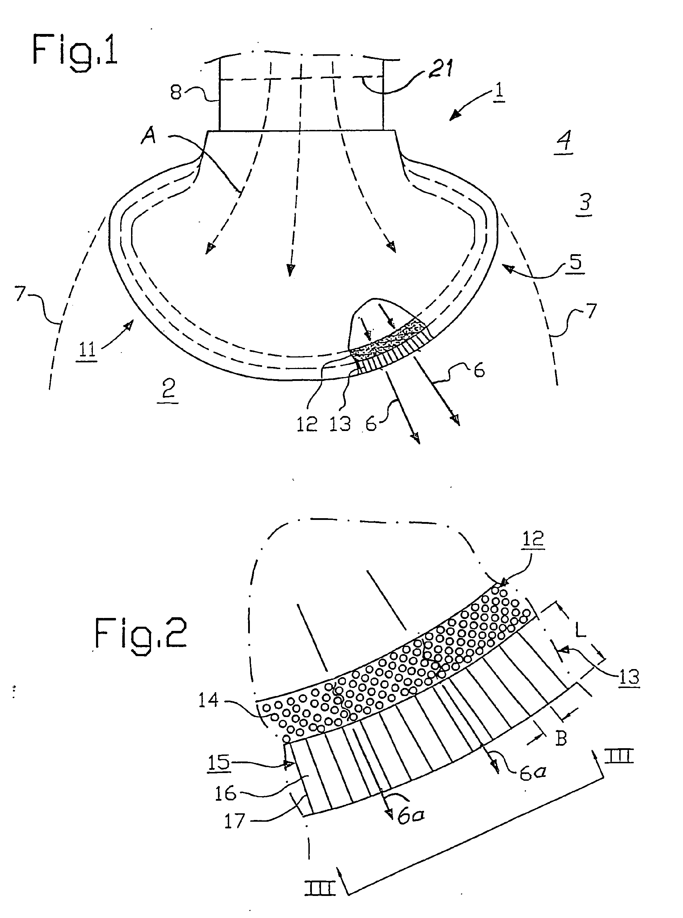

In the embodiment of figures 1-4, the intake air unit 5 comprises an air supply tube 8 which is located at the ceiling 9 in the premises 2 and which can be directed downwards into said premises. Down below, the air supply tube 8 includes at least one air permeable body 11 with at least one inner part 12 and at least one outer part 13. The body 11 is directed downwards or 3 0 substantially downwards.

The inner part 12 consists of or includes porous material 14 which is designed to offer resistance when air flows there through and said inner part can bring the air to flow there through as waved partial air streams 6a. The inner part 12 may have filtering properties for air flowing there through in order to obtain a low content of particles in the premises 2. The porous material 14 may be foamed plastic with preferably open cells.

The outer part 13 of the body 11 is non-porous and have portions 15 forming or defining passages or channels 16 which are rectilinear or substantially rectilinear, of uniform or substantially uniform thickness and located close to each other, and which extend in parallel or substantially in parallel relative to each other. The length of each passage 16 is at least four times greater than its width B. By means of the design of the passages 16 it is accomplished that each passage 16 provides for a good directional effect and generates a rectilinear partial air stream 6b at the mouth 16a of the passage 16 and also farther away there from. Together the rectilinear partial air streams 6b define a laminar intake air flow in said clean-air zone 7, which preferably is discharged at such low flow velocity that a turbulent zone 7a formed or generated about the clean-air zone 7 will be very narrow and without strong air 2 0 turbulence such that no or at least only small amounts of impure surrounding air is coejected by the intake air and mixed in the clean-air zone 7.

The supplied air A is preferably cooler than the air in the premises 2, such that the air A in the clean-air zone 7 has a lower temperature than the surrounding air.

The air streams 6 are generated by means of a fan device 22 or similar, which is provided to give or impart to said air streams a low velocity and a sufficient dynamic velocity pressure (dp). A device 23 is provided to ensure that the air streams 6 get a lower temperature than the surrounding air in the premises 2 such that said air streams 6 can be brought to flow to a low level in said premises 2.

The shape of the body 11 provides for an optimum short pitch length. The pitch length is decelerated because P_{T} = P_{D} + P_{S} (P_{T} = total pressure, P_{D} = dynamic pressure, P_{S} = static pressure), where P_{S} is lower adjacent the body 11 than farther away from said body, whereby a negative pressure is generated which decelerates the air velocity and thus, the propagation and pitch length. This generates an inwardly directed force which, when the body 11 is designed according to the invention, results in no or very little admixture of surrounding room air, but which, when the body 11 is not correctly designed, causes admixture of surrounding room air. The shape of the body 11 and the improved directional effect imparts a decelerating effect to the above mentioned inwardly directed force, resulting in a short pitch length. Thus, when the air has lost its dynamic velocity pressure (dp), the under-temperature takes over the guidance of the intake air such that it reaches the intended level in the premises 2. Since the body 11 has a shape which counteracts the contracting properties of cooled air (which gives the body 11 an increasing velocity profile), a completely pure clean-air zone 7 is obtained within a restricted area.

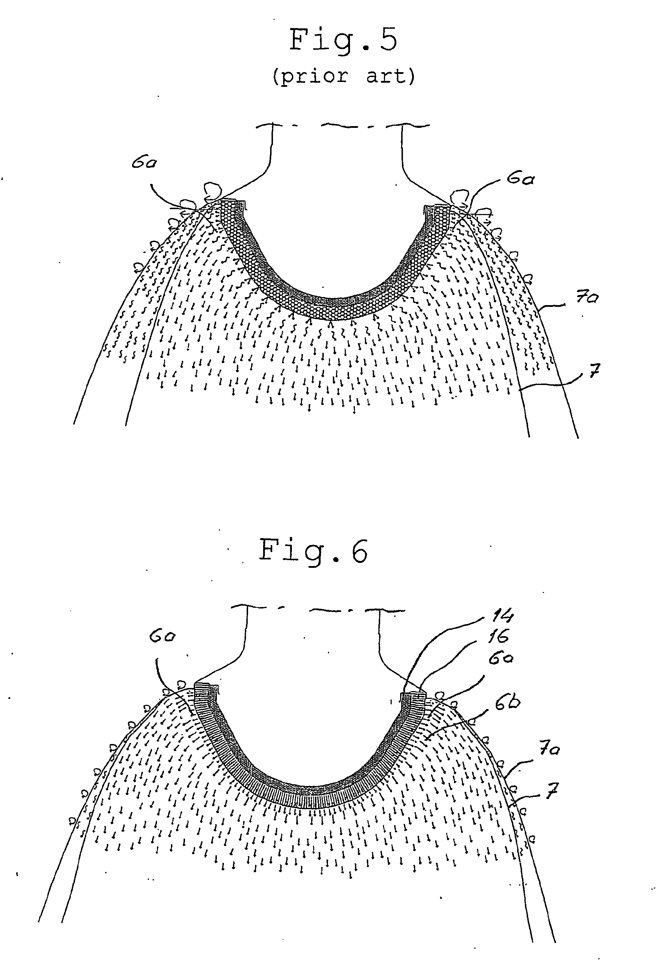

Figure 5 illustrates what is happening at a prior art device. Here, non-parallel partial air streams 6a are discharged, which instead are directed partially towards each other, which means that said partial air streams 6a collide with each other and become turbulent. Hereby, a wide turbulent zone 7a is generated around the clean-air zone 7 and outside thereof the air is subjected to substantial turbulence, which is shown with arrows.

Figure 6 illustrates with a similar view what is happening at a device according to the invention. Here, parallel partial air streams 6a are discharged or exhausted, which means that these do not disturb each other when they flow out and thereby, a laminar air flow is generated without turbulence close to the body 11 or farther out there from. This in turn results in that the turbulent zone 7a around the clean-air zone 7 becomes more narrow and the turbulence around it less.

The partial air streams 6a close to the body 11 generate a microscopic laminar flow from each passage 16 which surprisingly results in a macroscopic, substantially less incorporation and mixing of surrounding air, which also results in that smaller amounts of surrounding air are drawn downwards in the premises 2.

The passages 16 may have a length L which is 4-10 times greater than their width B and they may preferably have a length L which is 4-6 times their width B.

The passages 16 are rectilinear or substantially rectilinear, and of uniform thickness. They preferably have the same or substantially the same diameter along their entire length L. Furthermore, they prefer ably all have the same shape and preferably the same length.

The portions 15 defining the passages form together a continuous, rigid outer part 13 and the passages 16 are preferably defined by tubes 17 which are located close beside each other, engage each other and are connected to each other. The tubes 17 are preferably made of a plastic material and they are connected to each other preferably by fusing.

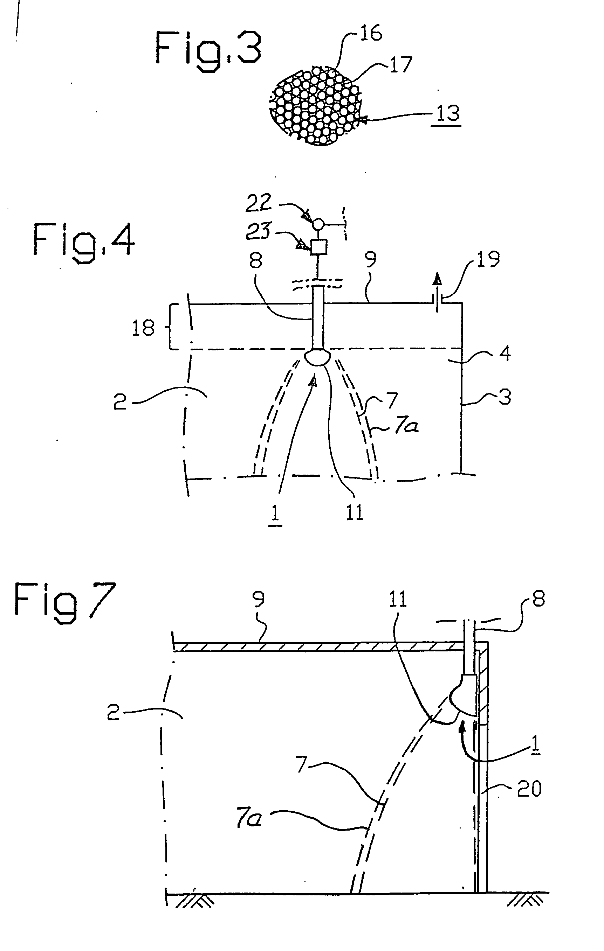

The air permeable body 11 preferably has a cross-sectional shape in the form of parts of a circle or substantially a circle or primarily parts of a circle or substantially a circle, i.e. shapes as in figures 1 and 4. Another suitable cross-sectional shape for the body 11 is a semicircular shape or substantially semi circular shape. Still another suitable cross-sectional shape for the body 11 is the shape of a quarter of a circle or substantially a quarter of a circle, i.e. a shape as in figure 7, but the body 11 may have any other shape as parts of a circle or substantially a circle.

In the specific embodiment of figures 1 and 4, the body 11 is shaped or designed as a spherical segment or substantially as a spherical segment.

As is apparent from figure 4, the intake air unit 5 may be located beneath an upper zone 18 of the premises 2, namely such an upper zone 18 closest to the ceiling 9 of the premises 2 in which impure air is gathered and from which the impure air is ventilated through at least one air exhaust or air outlet 19 which preferably is provided at the ceiling 9. Hereby, it is ensured that the impure air from the upper zone 18 is not substantially coejected by the air streams 6 discharged by the air supply device 1. Furthermore, it is ensured that eventual turbulence in the upper zone 18 does not disturb the smooth flow of the air streams 6.

As is apparent from figure 7, the intake air unit 5 may be located above a door 20 to the premises 2 and it may be elongated and extend along at least a part of the width of the door 20. By locating the intake air unit 5 in this way, a curtain of clean air and/or cool air can be generated immediately within the door 20.

In order to filtrate the air A before it is fed into the intake air unit 5, one can locate or mount a filter 21 in the air supply tube 8 or on any other suitable location.

The invention is not limited to the embodiments of the air supply device 1 described above and illustrated in the drawings but by the attached claim. Thus, the tubes 17 may e.g. be made of a metallic material or of a ceramic material or any other suitable material instead of a plastic material, the outer part 13 may be thicker than the inner part 12, at least the outer part 13 and preferably also the inner part 12 may consist of such heat resistant material that the air supply device 1 can substantially withstand fires and instead of an air outlet 19 located at the ceiling 9 of the premises 2, at least one air outlet (not shown) can be located down below in the premises 2.

The air supply device 1 can be an intake air device with one or more intake air units 5 and/or be a device for air circulation. The device 23 can be a device taking in cool air and/or including a cooling device or be a cooling device for cooling air.

## Claims

1. Air supply device for obtaining zones of clean air (7) in premises, said air supply device (1) comprising at least one air permeable body (11) including at least one inner and at least one outer part (12,13) of which the inner part (12) consists of or includes porous material,
- wherein at least one fan device (22) is provided to bring air (A), which is to be supplied to the premises (2), to flow through the air permeable body (11) at low air velocity,
- wherein at least one device (23) is provided to ensure that the air (A) supplied to the premises (2) has a lower temperature than the air in said premises (2), and
- wherein the air permeable body (11), in cross section, has the shape of parts of a circle or substantially a circle or primarily parts of a circle,
- **characterized in** the combination that the inner part (12) consists of or includes porous material and the outer part (13) has passages (16) which are substantially rectilinear, substantially uniform in thickness and located close to each other, said passages (16) further having a length (L) which is at least four times greater than their width (B) in order to generate rectilinear and uniformly distributed partial air streams (6a) for making the turbulent zone (7a) around the clean-air zone (7) narrower so that the turbulence around the clean-air zone (7) Thereby decreases.

2. Air supply device according to claim 1, **characterized in that** the length (L) of each passage (16) is 4-10 times greater than their width (B).

3. Air supply device according to claim 2, **characterized in that** the length (L) of each passage (16) is 4-6 times greater than their width (B).

4. Air supply device according to any preceding claim, **characterized in that** all or almost all passages (16) are of equal length.

5. Air supply device according to any preceding claim, **characterized in that** the passages (16) are defined by tubes (17) which are located close to each other and connected to each other.

6. Air supply device according to claim 5, **characterized in that** the tubes (17) are made of a plastic material.

7. Air supply device according to claim 5, **characterized in that** the tubes (17) are made of a metallic material.

8. Air supply device according to claim 5, **characterized in that** the tubes (17) are made of a ceramic material.

9. Air supply device according to any of claims 5-7, **characterized in that** the tubes (17) are interconnected by fusing.

10. Air supply device according to any preceding claim, **characterized in that** the porous material (14) of the inner part (12) is designed to permit filtration of air flowing through said porous material in order to obtain a low content of particles in the premises (2).

11. Air supply device according to any preceding claim, **characterized in that** the porous material (14) of the inner part (12) consists of foamed plastic with open cells.

12. Air supply device according to any preceding claim, **characterized in that** the outer part (13) is thicker than the inner part (12).

13. Air supply device according to any preceding claim, **characterized in that** the outer part (13) consists of a heat resistant material.

14. Air supply device according to any preceding claim, **characterized in that** the inner and outer parts (12, 13) are connected to each other.

15. Air supply device according to any preceding claim, **characterized in that** the body (11) is in cross section shaped as a semicircle or substantially as a semicircle.

16. Air supply device according to any of claims 1-15, **characterized in that** the air permeable body (11) is in cross section shaped as a quarter of a circle or substantially as a quarter of a circle.

17. Air supply device according to any of claims 1-14, **characterized in that** the air permeable body (11) is shaped as a spherical segment or as a substantially spherical segment.

18. Air supply device according to any preceding claim, **characterized in that** the device (23) which is provided to ensure that the air (A) supplied to the premises (2) has a lower temperature than the air in said premises (2), is provided to supply air at such temperature that said air descends to a low level in the premises (2).

19. Air supply device according to any preceding claim, wherein impure air is gathered in an upper zone (18) closest to the ceiling (9) of the premises (2), and wherein at least one air outlet (19) for impure air is provided at the ceiling (9) of the premises (2), **characterized in that** the air permeable body (11) is located beneath the upper zone (18) such that substantially no impure air is coejected out of the upper zone (18) by the air streams (6) discharged by the air permeable body (11) .

20. Air supply device according to any preceding claim, **characterized in that** the air permeable body (11) is located above a door (20) to the premises (2) and it is elongated and extends along at least a part of the width of the door (20).

21. Air supply device according to any preceding claim, **characterized in that** the device (23) which is provided to ensure that the air (A) supplied to the premises (2) has a lower temperature than the air in said premises (2), is a device for taking in cool air and/or includes a cooling device or is a cooling device for cooling air.

## Patentansprüche

1. Luftzufuhrvorrichtung zum Erlangen von Zonen mit reiner Luft (7) in Räumlichkeiten, die Luftzufuhrvorrichtung (1) aufweisend mindestens ein luftdurchlässiges Gehäuse (11) mit mindestens einem inneren und mindestens einem äußeren Bauteil (12, 13), wobei das innere Bauteil (12) aus einem porösen Material besteht oder ein solches beinhaltet,
- wobei mindestens eine Gebläsevorrichtung (22) zum Fördern von Luft (A) in die Räumlichkeiten und zum Durchströmen des luftdurchlässigen Gehäuses (11) bei niedriger Luftgeschwindigkeit bereitgestellt ist,
- wobei mindestens eine Vorrichtung (23) bereitgestellt ist, die sicherstellt, dass die zu den Räumlichkeiten (2) geförderte Luft (A) eine niedrigere Temperatur aufweist als die Luft in den Räumlichkeiten (2) und
- wobei der Querschnitt des luftdurchlässigen Gehäuses (11) die Form von Kreisteilen, im Wesentlichen die Form eines Kreises oder hauptsächlich die Form von Kreisteilen aufweist,
**dadurch gekennzeichnet, dass** das innere Bauteil (12) aus einem porösen Material besteht oder ein solches beinhaltet und dass das äußere Bauteil (13) Durchtritte (16) aufweist, die im Wesentlichen geradlinig, von gleichmäßiger Dicke und nah beieinander angeordnet sind, wobei die Durchtritte (16) ferner eine Länge (L) aufweisen, die mindestens viermal größer als ihre Breite (B) ist, so dass geradlinige und gleichmäßig verteilte Teilluftströme (6a) generiert werden, um die turbulente Zone (7a) um die Reinluft-Zone (7) herum zu schmälern, so dass sich dabei die Turbulenz um die Reinluft-Zone (7) verringert.

2. Luftzufuhrvorrichtung nach Anspruch 1,
**dadurch gekennzeichnet, dass** die Länge (L) jedes Durchtritts (16) 4-10 mal größer als ihre Breite (B) ist.

3. Luftzufuhrvorrichtung nach Anspruch 2,
**dadurch gekennzeichnet, dass** die Länge jedes Durchtritts (16) 4-6 mal größer als ihre Breite (B) ist.

4. Luftzufuluvorrichtung nach einem der vorhergehenden Ansprüche,
**dadurch gekennzeichnet, dass** sämtliche oder nahezu sämtliche Durchtritte (16) die gleich lang sind.

5. Luftzufuluvorrichtung nach einem der vorhergehenden Ansprüche,
**dadurch gekennzeichnet, dass** die Durchtritte (16) durch Röhren (17) definiert werden, die nahe beieinander angeordnet und miteinander verbunden sind.

6. Luftzufuhrvorrichtung nach Anspruch 5,
**dadurch gekennzeichnet, dass** die Röhren (17) aus einem Kunststoffmaterial bestehen.

7. Luftzufuhrvorrichtung nach Anspruch 5,
**dadurch** gekenntzeichnet, dass die Röhren (17) aus einem metallischen Material bestehen.

8. Luftzufuhrvorrichtung nach Anspruch 5,
**dadurch gekennzeichnet, dass** die Röhren (17) aus einem keramischen Material bestehen.

9. Luftzufuhrvorrichtung nach einem der Ansprüche, 5-7,
**dadurch gekennzeichnet, dass** die Röhren (17) durch Verschmelzung miteinander verbunden sind.

10. Luftzufuhrvorrichtung nach einem der vorhergehenden Ansprüche,
**dadurch gekennzeichnet, dass** das poröse Material (14) des inneren Bauteils (12) dazu ausgestaltet ist, eine Filtrierung der durch das poröse Material durchströmenden Luft zu erlauben, um einen niedrigen Partikelgehalt in den Räumlichkeiten (2) zu erlangen.

11. Luftzufuhrvorrichtung nach einem der vorhergehenden Ansprüche,
**dadurch gekennzeichnet, dass** das poröse Material (14) des inneren Bauteils (12) aus einem aufgeschäumten Kunststoff mit offenen Zellen besteht.

12. Luftzufuhrvorrichtung nach einem der vorhergehenden Ansprüche,
**dadurch gekennzeichnet, dass** das äußere Bauteil (13) dicker als das innere Bauteil (12) ist.

13. Luftzufuhsvorrichtung nach einem der vorhergehenden Ansprüche,
**dadurch gekennzeichnet, dass** das äußere Bauteil (13) aus einem hitzefesten Material besteht.

14. Luftzufuhrvorrichtung nach einem der vorhergehenden Ansprüche,
**dadurch gekennzeichnet, dass** das innere und das äußere Bauteil (12, 13) miteinander verbunden sind.

15. Luftzufuhrvorrichtung nach einem der vorhergehenden Ansprüche,
**dadurch gekennzeichnet, dass** der Querschnitt des Gehäuses (11) als Halbkreis oder im Wesentlichen als Halbkreis ausgeformt ist.

16. Luftzufuhrvorrichtung nach einem der Ansprüche 1-15,
**dadurch gekennzeichnet, dass** der Querschnitt des luftdurchlässigen Gehäuses (11) als Viertelkreis oder im Wesentlichen als Viertelkreis ausgeformt ist.

17. Luftzufuhrvorrichtung nach einem der Ansprüche 1-14,
**dadurch gekennzeichnet, dass** das luftdurchlässige Gehäuses (11) als Kugelsegment oder im Wesentlichen als Kugelsegment ausgeformt ist.

18. Luftzufultrvorrichtung nach einem der vorhergehenden Ansprüche,
**dadurch gekennzeichnet, dass** die Vorrichtung (23), die sicherstellt, dass die zu den Räumlichkeiten (2) geförderte Luft (A) eine niedrigere Temperatur aufweist als die Luft in den Räumlichkeiten (2), zum Fördern von Luft mit einer solchen Temperatur bereitgestellt ist, dass die Luft auf eine niedrige Höhe in den Räumlichkeiten (2) sinkt.

19. Luftzufuhrvorrichtung nach einem der vorhergehenden Ansprüche, wobei unreine Luft in einer oberen Zone (18), die sich am dichtesten an der Decke (9) befindet, gesammelt wird und wobei mindestens ein Luftauslass (19) für unreine Luft an der Decke (9) der Räumlichkeiten (2) bereitgestellt ist,
**dadurch gekennzeichnet, dass** das luftdurchlässige Gehäuse (11) unterhalb der oberen Zone (18) angeordnet ist, so dass im Wesentlichen keine unreine Luft aus der oberen Zone (18) durch die aus dem luftdurchlässigen Gehäuse abgegebenen Luftströme (6) vertrieben wird.

20. Luftzufuhrvorrichtung nach einem der vorhergehenden Ansprüche,
**dadurch gekennzeichnet, dass** das luftdurchlässige Gehäuse oberhalb einer Tür (20) zu den Räumlichkeiten (2) angeordnet ist, eine längliche Form aufweist und sich über mindestens einen Teil der Breite der Tür (20) erstreckt.

21. Luftzufittuvorrichtung nach einem der vorhergehenden Ansprüche,
**dadurch gekennzeichnet, dass** die Vorrichtung (23), die sicherstellt, dass die zu den Räumlichkeiten (2) geförderte Luft (A) eine niedrigere Temperatur aufweist als die Luft in den Räumlichkeiten (2), eine Vorrichtung zum Aufnehmen von kühler Luft ist und/oder eine Kühlvorrichtung aufweist oder eine Kühlvorrichtung zum Kühlen von Luft ist.

## Revendications

1. Dispositif d'alimentation en air destiné à obtenir des zones d'air propre (7) dans des locaux, ledit dispositif d'alimentation en air (1) comprenant au moins un corps perméable à l'air (11) qui comprend au moins une partie interne et au moins une partie externe (12, 13), la partie interne (12) étant constituée ou comprenant un matériau poreux,
- au moins un dispositif ventilateur (22) étant prévu pour amener de l'air (A) devant être fourni aux locaux (2) à s'écouler à travers le corps perméable à l'air (11) à une faible vitesse d'air,
- au moins un dispositif (23) étant prévu pour s'assurer que l'air (A) fourni aux locaux (2) a une température plus basse que l'air contenu dans lesdits locaux (2), et
- le corps perméable à l'air (11), en coupe, présente la forme de parties d'un cercle, ou sensiblement d'un cercle ou de parties principales d'un cercle,
- **caractérisé par** la combinaison du fait que la partie interne (12) est constituée ou comprend un matériau poreux et la partie externe (13) présente des passages (16) sensiblement rectilignes, sensiblement uniformes en épaisseur et situés à proximité les uns des autres, lesdits passages (16) ayant en outre une longueur (L) au moins quatre fois plus grande que leur largeur (B) afin de produire des courants d'air partiels (6a) rectilignes et distribués de façon uniforme, pour rendre la zone turbulente (7a) située autour de la zone d'air propre (7) plus étroite, de telle sorte que la turbulence autour de la zone d'air propre (7) décroisse.

2. Dispositif d'alimentation on air selon la revendication 1, **caractérisé en ce que** la longueur (L) de chacun des passages (16) est de 4 à 10 fois supérieure à leur largeur (B).

3. Dispositif d'alimentation en air selon la revendication 1, **caractérisé en ce que** la longueur (L) de chacun des passages (16) est de 4 à 6 fois supérieure à leur largeur (B).

4. Dispositif d'alimentation en air selon l'une quelconque des revendications précédentes, **caractérisé en ce que** tous ou presque tous les passages (16) sont de longueur égale.

5. Dispositif d'alimentation en air selon l'une quelconque des revendications précédentes, **caractérisé en ce que** les passages (16) sont définis par des tubes (17) situés à proximité les uns des autres et reliés les uns aux autres.

6. Dispositif d'alimentation en air selon la revendication 5, **caractérisé en ce que** les tubes (17) sont constitués d'un matériau plastique.

7. Dispositif d'alimentation en air selon la revendication 5, **caractérisé en ce que** les tubes (17) sont constitués d'un matériau métallique.

8. Dispositif d'alimentation en air selon la revendication 5, **caractérisé en ce que** les tubes (17) sont constitués d'un matériau céramique.

9. Dispositif d'alimentation en air selon l'une quelconque des revendications 5 à 7, **caractérisé en ce que** les tubes (17) sont reliés entre eux par fusion.

10. Dispositif d'alimentation en air selon l'une quelconque des revendications précédentes, **caractérisé en ce que** le matériau poreux (14) de la partie interne (12) est conçu pour permettre la filtration de l'air s'écoulant à travers ledit matériau poreux afin d'obtenir un faible taux de particules dans les locaux (2).

11. Dispositif d'alimentation en air selon l'une quelconque des revendications précédentes, **caractérisé en ce que** le matériau poreux (14) de la partie interne (12) est constitué de plastique cellulaire à cellules ouvertes.

12. Dispositif d'alimentation en air selon l'une quelconque des revendications précédentes, **caractérisé en ce que** la partie externe (13) est plus épaisse que la partie interne (12).

13. Dispositif d'alimentation en air selon l'une quelconque des revendications précédentes, **caractérisé en ce que** la partie externe (13) est constituée d'un matériau résistant à la chaleur.

14. Dispositif d'alimentation en air selon l'une quelconque des revendications précédentes, **caractérisé en ce que** les parties interne et externe (12, 13) sont reliées l'une à l'autre.

15. Dispositif d'alimentation en air selon l'une quelconque des revendications précédentes, **caractérisé en ce que** le corps (11), en coupe, est formé en demi-cercle ou sensiblement en demi-cercle.

16. Dispositif d'alimentation en air selon l'une quelconque des revendications 1 à 15, **caractérisé en ce que** le corps perméable à l'air (11), en coupe, est formé en quart-de-cercle ou sensiblement en quart-de-cercle.

17. Dispositif d'alimentation en air selon l'une quelconque des revendications 1 à 14, **caractérisé en ce que** le corps perméable à l'air (11), en coupe, a la forme d'un segment sphérique ou sensiblement la forme d'un segment sphérique.

18. Dispositif d'alimentation en air selon l'une quelconque des revendications précédentes, **caractérisé en ce que** le dispositif (23) prévu pour s'assurer que l'air (A) fourni aux locaux (2) a une température plus basse que l'air contenu dans lesdits locaux (2) est prévu pour fournir de l'air à une température telle que ledit air descende à bas niveau dans les locaux (2).

19. Dispositif d'alimentation en air selon l'une quelconque des revendications précédentes, de l'air vicié étant collecté dans une zone supérieure (18) proche du plafond (9) des locaux (2), et au moins une sortie d'air (19) pour air vicié étant prévue à l'emplacement du plafond (9) des locaux (2), **caractérisé en ce que** le corps perméable à l'air (11) est situé au-dessous de la zone supérieure (18) de sorte que sensiblement aucun air vicié n'est projeté hors de la zone supérieure (18) par les courants d'air (6) déchargés par le corps perméable à l'air (11).

20. Dispositif d'alimentation en air selon l'une quelconque des revendications précédentes, **caractérisé en ce que** le corps perméable à l'air (11) est situé au-dessus d'une porte (20) des locaux (2) et est allongé et s'étend le long d'au moins une partie de la largeur de la porte (20).

21. Dispositif d'alimentation en air selon l'une quelconque des revendications précédentes, **caractérisé en ce que** le dispositif (23) prévu pour s'assurer que l'air (A) fourni aux locaux (2) a une température plus basse que l'air contenu dans lesdits locaux (2) est un dispositif d'admission d'air froid et/ou comprend un dispositif de refroidissement, ou est un dispositif de refroidissement destiné à refroidir l'air.
